# EUROPEAN PATENT SPECIFICATION

(11) **EP 2 706 265 B1**
(45) Date of publication and mention of the grant of the patent: **20.04.2016**
(21) Application number: 13005591.6
(22) Date of filing: 20.08.2010
(51) Int. Cl.: F16H 1/32, F16H 57/08

(54) **Speed reducer**
Drehzahlminderer
Réducteur de vitesse

(30) Priority: 02.09.2009 JP 2009202671; 02.09.2009 JP 2009202652; 07.01.2010 JP 2010002034
(43) Date of publication of application: 12.03.2014
(62) Divisional of application: 10813624.3
(73) Proprietor: NTN Corporation, Osaka-shi, Osaka 550-0003 (JP)
(72) Inventor: Koji, Sato, Iwata-shi Shizuoka, 4380037 (JP); Takahide, Saito, Iwata-shi Shizuoka, 4380037 (JP)
(74) Representative: Grünecker Patent- und Rechtsanwälte PartG mbB

(56) References cited:
- DE-U1- 8 815 532
- JP-A- S6 293 565

## Description

The present invention relates to a speed reducer according to the preamble of independent claim 1. Such a speed reducer can be taken from the prior art document JP S62 93565 A.

Patent document 1 discloses such a roller type speed reducer. As shown in Fig. 19, this roller type speed reducer includes a cylindrical housing 51, input and output shafts 52 and 53 mounted in the housing 51 so as to be coaxial with each other with their respective ends facing each other, and an internal gear 54 fixedly mounted in the housing 51. The input shaft 52 has two axially spaced apart eccentric shaft portions 55 at its end portion facing the output shaft. The eccentric shaft portions 55 are located radially inside of the internal gear 54 so as to be rotatable relative to the internal gear 54. The output shaft 53 has a retainer 57 at its end facing the input shaft. The retainer 57 is disposed between the internal gear 54 and ball bearings 59 press-fitted around the respective eccentric shaft portions 55. The retainer 57 has circumferentially equidistantly spaced apart first pockets 58 radially facing one of the eccentric shaft portions 55 and fewer in number than the teeth of the internal gear, and circumferentially equidistantly spaced apart second pockets 58 radially facing the other of the eccentric shaft portions and fewer in number than the teeth of the internal gear 54. Rollers 56 are rollably received in the respective first and second pockets 58.

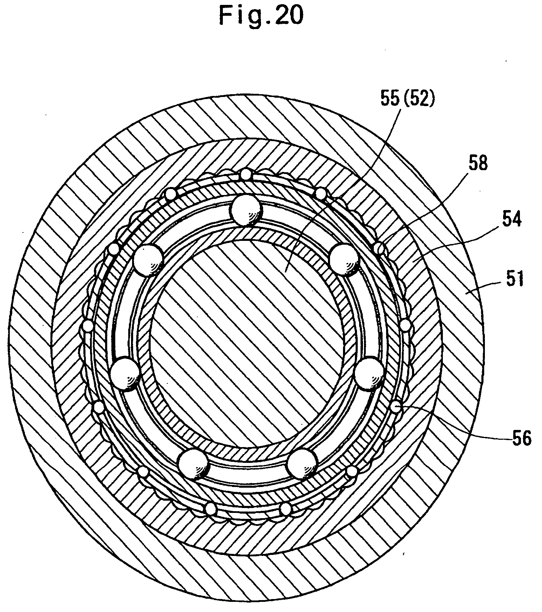

With this speed reducer, as will be apparent from Fig. 20, when the input shaft 52 rotates and thus the eccentric shaft portions 55 rotate, each roller 56 meshes with the teeth of the internal gear 54 one after another. Thus, for every rotation of the input shaft 52, the rollers 56 circumferentially move (revolve around the input shaft) by a distance equal to the circumferential width of one tooth of the internal gear 54. The revolution of the rollers 56 is transmitted to the output shaft 53 through the retainer 57 so that the output shaft 53 rotates at a reduced speed ratio determined by the number of the teeth of the internal gear 54, relative to the input shaft 52.

For smooth transmission of rotation, in Patent document 1, the teeth of the internal gear 54 are curved such that all of the rollers 56 can simultaneously contact the respective teeth. For this purpose, each tooth is identical in shape of the locus of each roller 56 that is parallel to the locus of the roller 56 when the output shaft 53 rotates a distance equal to one pitch of the teeth of the internal gear 54 due to the rotation of the eccentric shaft portions 55.

### PRIOR ART DOCUMENTS

### PATENT DOCUMENTS

Patent document 1: JP Patent Publication 62-93565A

### SUMMARY OF THE INVENTION

### OBJECT OF THE INVENTION

With the speed reducer disclosed in Patent document 1, since it is necessary to mount the rollers 56 between the internal gear 54 and the eccentric shaft portions 55, the internal gear 54 is a cylindrical member fixed to the housing 51 by press-fitting.

When the internal gear 54 is pressed-fitted into the housing 51, the internal gear 54 tends to be deformed, which lowers dimensional accuracy of the tooth surface. This in turn makes smooth revolution of the rollers 56 difficult, and thus makes it difficult to smoothly transmit rotation of the input shaft to the output shaft.

Such a cylindrical internal gear 54 is produced first by forming its cylindrical outer surface, and then forming its teeth on its radially inner surface by e.g. broaching. Thus its production cost is high.

Accordingly, it is an object of the present invention to provide a speed reducer allowing improved dimensional accuracy while having increased durability and reduced manufacturing costs.

### MEANS TO ACHIEVE THE OBJECT

According to the present invention, the above objective is achieved by a speed reducer having the features of claim 1. **A preferred embodiment** is laid down in the dependent claim.

Since the plate-shaped internal gear members can be formed by pressing, the internal gear can be manufactured at a low cost.

The internal gear is preferably be rotationally fixed to the housing by an engaging means.

The engaging means may comprise an axial groove formed in the housing and a protrusion formed on an outer periphery of the internal gear and engaged in the axial groove, or may comprise an axial rib formed on the housing and recesses formed in outer peripheries of the plate-shaped internal gear members, with the axial rib engaged in the recesses.

Such an engaging means facilitates the assembly of the internal gear because the plate-shaped internal gear members can be easily fitted in position by sliding the protrusions on the plate-shaped internal gear members in the axial recess of the housing, or by sliding the rib on the housing in the recesses of the plate-shaped internal gear members.

The engaging means may comprise holes formed in the respective plate-shaped internal gear members, first and second threaded holes formed in the housing, and a threaded member inserted through the holes in the plate-shaped internal gear members and engaged in the threaded holes of the housing. With this arrangement, the threaded member securely fixes the plate-shaped internal gear members in position in the housing.

With this arrangement, the retainer member and the output shaft can be manufactured separately from each other. This makes it possible to manufacture the retainer member using a more productive method such as pressing. This also simplifies the manufacturing process of the output shaft, thus reducing the manufacturing cost.

The speed reducer according to the not claimed invention may further comprise a ball bearing provided radially outwardly of the eccentric shaft portion, and rotating means provided between the eccentric shaft portion and the ball bearing, whereby the ball bearing is allowed to rotate relative to the eccentric shaft portion through the rotating means.

With the speed reducer shown in Fig. 20, the ball bearings 59 are press-fitted onto the respective eccentric shaft portions 55 and thus their inner races are non-rotatable relative to the eccentric shaft portions 59. Thus, while the input shaft 52 is rotating, the same circumferential portion of the inner race of each ball bearing 59 is always located radially outwardly of a region of the eccentric shaft portion 55 that is radially most remote from the rotation axis of the input shaft 52 (this region is hereinafter referred to as "the eccentric region"). Thus while the input shaft 52 is rotating, loads keep acting on this same circumferential portion of the inner race, thus increasing the possibility of the impressions and peeling on the raceway of the inner race and the balls of the ball bearing 59.

With the speed reducer according to the not claimed invention, since the ball bearing is rotatable relative to the eccentric shaft portion through the rotating means, the inner race of the ball bearing constantly moves circumferentially relative to the above eccentric region. This prevents the same circumferential portion of the inner race of the ball bearing 59 from being always located radially outwardly of the eccentric region and thus always subjected to loads from the eccentric region, which in turn prevents e.g. impressions and peeling on the corresponding region of the raceway of the inner race of the ball bearing, as well as its balls.

The rotating means for the ball bearing is not limited, provided it allows the ball bearing to rotate relative to the eccentric shaft portion. For example, the rotating means may be a roller bearing fitted around the eccentric shaft portion.

Since rollers of a roller bearing comes into line contact with the raceways, a roller bearing is higher in load capacity than a ball bearing, of which the balls come into point contact with the raceways. Thus, by using a roller bearing as the above rotating means, it is possible to reduce the number of rolling elements to receive the same loads from the eccentric shaft portion.

### ADVANTAGES OF THE INVENTION

According to not claimed embodiments, with the internal gear mounted in the housing, no loads act radially inwardly on the plate-shaped internal gear members forming the internal gear from the radially inner surface of the housing, the plate-shaped internal gear members maintain high dimensional accuracy of their tooth surfaces, so that the internal gear, which is formed from the plate-shaped internal gear member, maintains high dimensional accuracy of its tooth surface.

Since, preferably, the internal gear is formed by superposing the plate-shaped internal gear members, the teeth and the radially outer surface of each plate-shaped internal gear members can be formed easily by working a plate member. Thus the internal gear can be manufactured at a low cost.

### BRIEF DESCRIPTION OF THE DRAWINGS

Fig 1 is a vertical sectional view of a speed reducer according to a first not claimed embodiment.
Fig. 2 is a cross-sectional view taken along line II-II of Fig. 1.
Fig. 3(a) is a perspective view of an internal gear of the speed reducer of the not claimed first embodiment; and Fig. 3(b) is a perspective view of one of plate-shaped internal gear members forming the internal gear of Fig. 3(a).
Fig. 4 is a perspective view of a portion of the speed reducer of Fig. 1. Fig. 5 is a vertical sectional view of a speed reducer according to a not claimed second embodiment.
Fig. 6(a) is a perspective view of an internal gear of the speed reducer of the not claimed second embodiment; and Fig. 6(b) is a perspective view of one of plate-shaped internal gear members forming the internal gear of Fig. 6(a).
Fig. 7 is a vertical sectional view of a speed reducer according to a third embodiment of the present invention.
Fig. 8 is an exploded perspective view of an output shaft and a retainer member of the third embodiment.
Fig. 9 is a vertical sectional view of a speed reducer according to a not claimed fourth embodiment.
Fig. 10 is a vertical sectional view of a speed reducer according to a not claimed fifth embodiment.
Fig. 11 is an exploded perspective view of an output shaft and a retainer member of the not claimed fifth embodiment.
Fig. 12 is a vertical sectional view of a speed reducer according to a not claimed sixth embodiment.
- Fig. 13 is a vertical sectional view of a speed reducer according to a not claimed seventh embodiment.
Fig. 14 is a cross-sectional view taken along line XIV-XIV of Fig. 13.
Fig. 15 is a vertical sectional view of a speed reducer according to an not claimed eighth embodiment.
Fig. 16 is a cross-sectional view taken along line XVI-XVI of Fig. 15.
- Fig. 17 is a vertical sectional view of a speed reducer according to a not claimed ninth embodiment.
Fig. 18 is a cross-sectional view taken along line XVIII-XVIII of Fig. 17.

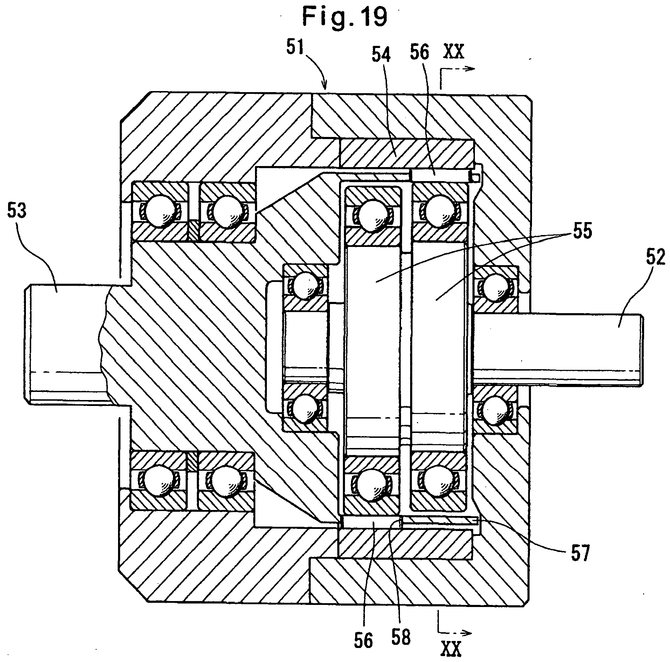

Fig. 19 is a sectional view of a conventional speed reducer.
Fig. 20 is a sectional view taken along line XX-XX of Fig. 19.

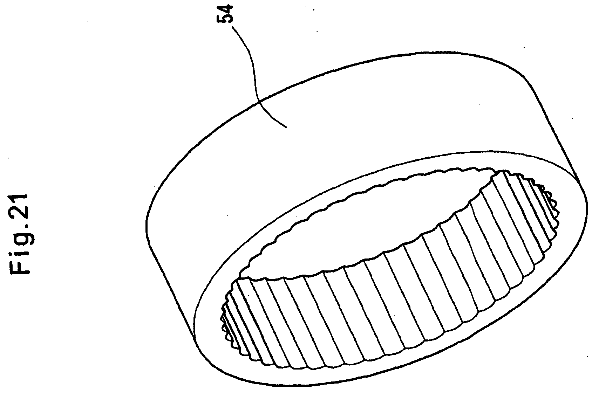

Fig. 21 is a perspective view of an internal gear of the conventional speed reducer of Fig. 19.

### BEST MODE FOR EMBODYING THE INVENTION

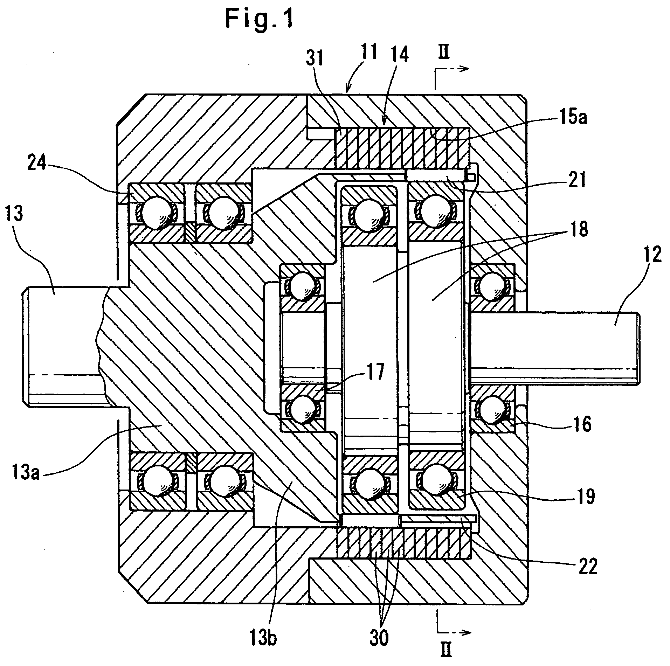

Now the embodiments are described with reference to the drawings. Figs. 1 to 4 show the speed reducer of the first embodiment.

As shown in Fig. 1, this speed reducer has a cylindrical housing 11, an internal gear 14 fixed in position in the housing 11, an input shaft 12 rotatably supported by the housing 11, and an output shaft 13 provided coaxially with the input shaft 12.

The housing 11 comprises a first axially split housing portion 11a and a second axially split housing portion 11b. The first and second split housing portions 11a and 11b are fixed to each other by bolts, not shown.

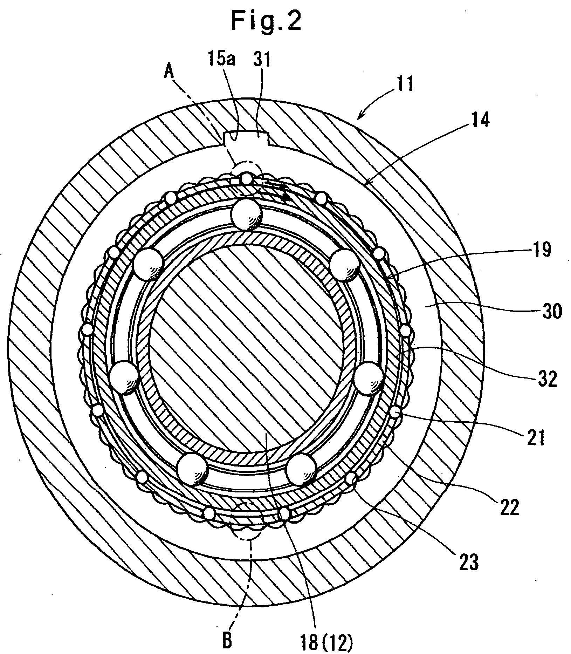

The first split housing portion 11a is formed with a large-diameter bore 15 in its end surface facing the second split housing portion 11b. An axial engaging groove is formed in the inner peripheral surface of the large-diameter bore 15 (see Fig. 2).

As shown in Fig. 1, the first split housing portion has an end wall 25 at its first end (which is also a first end of the housing 11). The input shaft 12 is inserted through a shaft insert hole 26 formed in the center of the end wall 25. The input shaft 12 is rotatably supported by a bearing 16 mounted in the shaft insert hole 26 so as to be coaxial with the internal gear 14. Two axially spaced apart eccentric shaft portions 18 are provided radially inside the internal gear 14 and rotationally fixed to the input shaft 12 at its second end portion, which is located in the housing 11.

The eccentric shaft portions 18 are arranged such that their central axes (i.e. the centers of their respective radially outer cylindrical surfaces) are located diametrically opposite to each other with respect to the central axis of the input shaft 12. Ball bearings 19 are press-fitted on the radially outer cylindrical surfaces of the eccentric shaft portions 18, respectively.

The output shaft 13 is inserted in the second split housing portion 11b. The output shaft 13 has a trunk portion 13a located close to the second end of the housing 11, and a tubular portion 13b located close to the input shaft 12 and coaxial with the trunk portion 13a.

The output shaft 13 has its trunk portion 13a supported by bearings 24 mounted in the open end portion of the second split housing portion 11b (i.e. the second end portion of the housing 11) so as to be rotatable and coaxial with the input shaft 12. The input shaft 12 has its second end inserted in the tubular portion 13b of the output shaft 13 and rotatably supported by a bearing 17 mounted in the tubular portion 13b.

The tubular portion 13b of the output shaft 13 has an integral retainer 22 which is disposed between the ball bearings 19, which are mounted around the eccentric shaft portions 18, and the internal gear 14 so as to be rotatable relative to the ball bearings 19 and the internal gear 14.

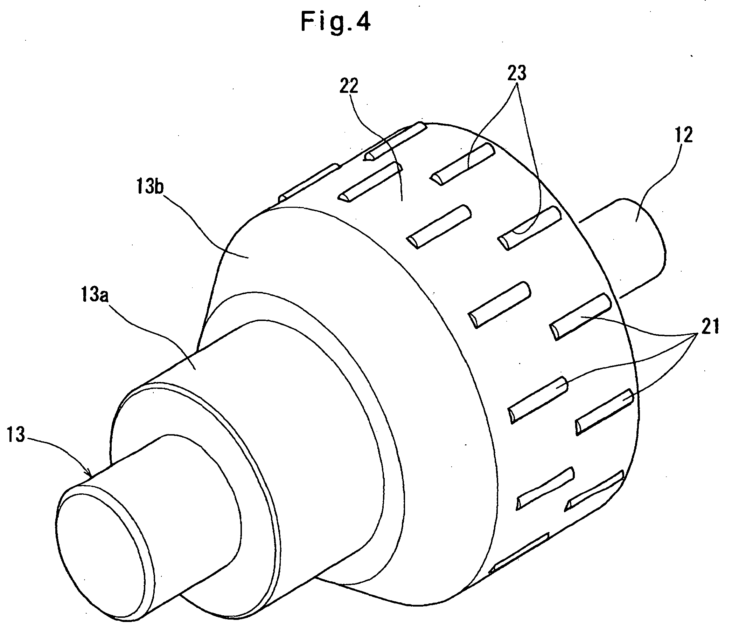

As shown in Fig. 4, the retainer 22 has two rows of pockets 23, each row of pockets being circumferentially equidistantly spaced from each other. The two rows of pockets 23 radially align with the respective ball bearings 19. The pockets 23 in each row are circumferentially offset from the respective pockets 23 in the other row by half the distance between the circumferentially adjacent pockets 23.

The pockets 23 in each row are smaller in number than teeth 32 formed on the radially inner surface of the internal gear 14. A roller 21 is received in each pocket 23 so as to be radially movable and capable of meshing with the teeth 32 of the internal gear 14.

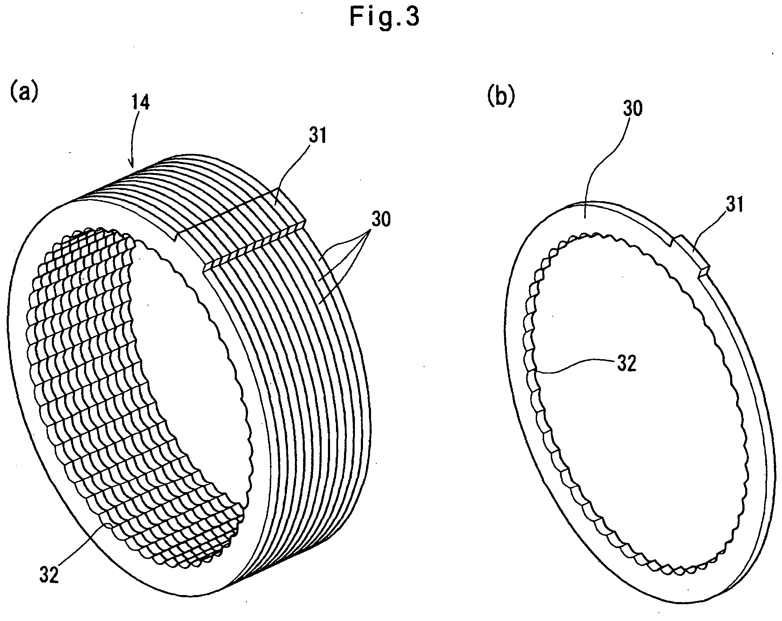

The internal gear 14 is mounted in the large-diameter bore 15 of the first split housing portion 11a. The internal gear 14 comprises a plurality of plate-shaped internal gear members 30 each having teeth 32 on its radially inner surface and a radially outwardly extending protrusion 31 on its radially outer surface (see Fig. 3(b)). As shown in Fig. 3(a), the plate-shaped internal gear members 30 are brought into abutment with each other such that the respective protrusions 31 are axially aligned with each other. In this state, the teeth 32 of each plate-shaped internal gear member 30 are axially aligned with the corresponding teeth 32 of the other plate-shaped internal gear members 30.

The plate-shaped internal gear members 30 have an outer diameter slightly smaller than the inner diameter of the large-diameter bore 15 of the first split housing portion 11a. With the plate-shaped internal gear members 30 in abutment with each other, by engaging their respective protrusions 31 in the engaging groove 15a of the large-diameter bore 15, the plate-shaped internal gear members 30 can be loosely fitted in the large-diameter bore 15.

With the plate-shaped internal gear members 30 in engagement with the engaging groove 15a of the first split housing portion 15a, the internal gear 14 is rotationally fixed to the housing 11. The protrusions 31 and the engaging groove 15a thus constitute an engaging means. Alternatively, this engaging means may comprise radially inwardly extending recesses formed in the respective plate-shaped internal gear members 30 and a radially inwardly extending axial rib formed on the inner wall of the large-diameter bore 15 of the first split housing portion 11a so as to be engageable in the recesses of the plate-shaped internal gear members 30.

The teeth 32 of the plate-shaped internal gear members 30 are curved such that all of the circumferentially spaced apart rollers 21 can simultaneously contact the respective teeth 32. In order that all the rollers 21 simultaneously contact the corresponding teeth 32, each tooth 32 is identical in shape of the locus of each roller 21 that is parallel to the locus of the roller 56 when the output shaft 13 rotates a distance equal to one pitch of the internal teeth 32 due to the rotation of the eccentric shaft portions 18.

When the input shaft 12 of this speed reducer rotates, and thus the eccentric shaft portions 18 also rotate, the rollers 21 are brought into meshing engagement with the corresponding teeth 32 of the internal gear 14 one after another. Thus, every time the input shaft 12 rotates once, the rollers 21 revolve around the input shaft 12 by a distance equal to the circumferential dimension of one tooth 32. Since the output shaft 13 is rotated by the rollers 21 through the retainer 22, the output shaft 13 is rotated at a reduced speed relative to the input shaft 12 in a reduction ratio determined by the number of teeth of the internal gear 14.

Since the internal gear 14 of this embodiment comprises the plurality of plate-shaped internal gear members 30, and is loosely fitted in the first split housing portion 11a, the individual plate-shaped internal gear members 30 are never deformed as in the case of the internal gear of conventional speed reducers which has to be press-fitted into the housing. This makes it possible to maintain high tooth surface accuracy of the plate-shaped internal gear members 30, and thus the tooth surface accuracy of the entire internal gear 14, which comprises the plate-shaped internal gear members 30.

Since it is possible to change the axial width of the internal gear 14 by changing the number of the plate-shaped internal gear members 30 according to the torque capacity required for the speed reducer, the internal gear 14 can be used in a wider variety of speed reducers.

The plate-shaped internal gear members 30 may be formed by pressing plates made of a low-carbon material such as structural low-carbon steel or low-alloy steel. By pressing, it is possible to form the teeth 32 simultaneously when forming the radially outer contour of the gear members 30. This eliminates the need for e.g. broaching which was necessary to form teeth of conventional internal gears, thus significantly simplifying the manufacturing process of the internal gear, which leads to improved productivity and reduced production cost.

In order to improve mechanical strength of the plate-shaped internal gear members 30, they may be subjected to carburizing. In order to improve strength and wear resistance of the plate-shaped internal gear members 30, the surfaces of the teeth 32 of the plate-shaped internal gear members 30 may be subjected to induction hardening. Carburizing is a treatment method in which carbon is introduced/diffused into a low-carbon material through its surface and the material is subjected to hardening thereafter. Induction hardening is a hardening treatment in which a portion of a conductive material that has to be hardened is heated by Joule heat due to electromagnetic induction by inserting the portion to be hardened into a coil through which high-frequency current is flowing.

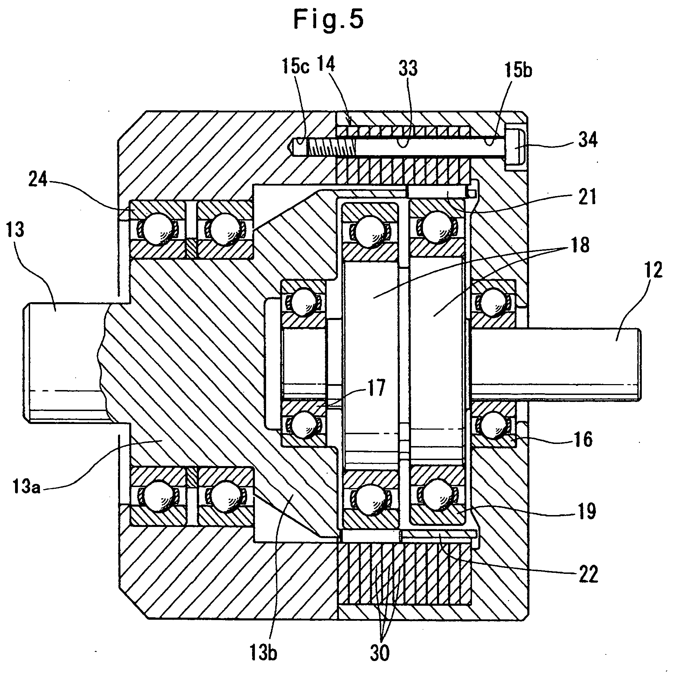

The speed reducer of the second embodiment is shown is Figs. 5-7.

In the second embodiment, a different engaging means is used to rotationally fix the plate-shaped internal gear members 30. Otherwise, the second embodiment is structurally identical to the first embodiment. Thus, like elements are denoted by identical numerals and their description is omitted.

Specifically, the engaging means of the second embodiment comprises through holes 33 formed in the respective plate-shaped internal gear members 30 of the internal gear 14, axially extending threaded holes 15b and 15c formed in the housing 11 near its outer periphery, and threaded members 34 extending through the through holes 33 of the respective plate-shaped internal gear members 30 and in threaded engagement with the threaded holes 15b and 15c of the housing 11 (see Fig. 5).

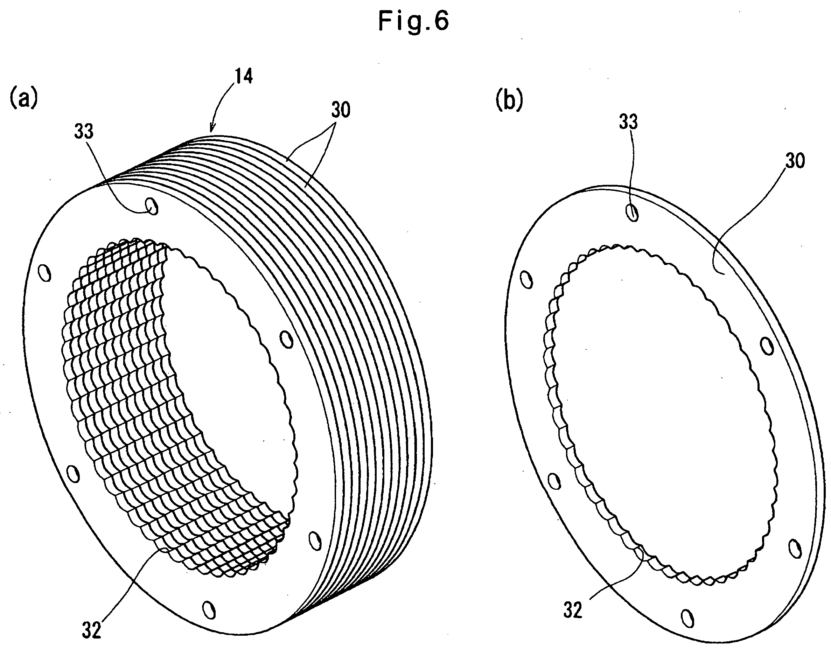

As shown in Fig. 6(b), a plurality (six in Fig. 6(b)) of the through holes 33 are formed in each plate-shaped internal gear member 30 so as to be circumferentially equidistantly spaced apart from each other. There are provided six of the threaded holes 15a so as to axially align with the respective six through holes 33 of each internal gear member 30, and six of the threaded 15b so as to axially align with the respective six through holes 33 of each internal gear member 30. The number of the through holes 33 in each plate-shaped internal gear member 30 is not specifically limited, and may be e.g. one or two, provided the engaging means serves the intended purpose.

The threaded holes 15b extend axially from the first end surface of the first split housing portion 11a to the large-diameter recess 15 near the outer periphery of the first-split housing portion 11a. The threaded holes 15c are formed in the end surface of the second split housing portion 11b facing the first split housing portion 11a.

As shown in Fig. 6(a), the plate-shaped internal gear members 30 are juxtaposed to each other such that their respective teeth 32 are axially aligned with each other to form the internal gear 14, and the thus assembled internal gear 30 is loosely fitted in the housing 11 with the through holes 33 of the respective plate-shaped internal gear members 30 axially aligned with the corresponding threaded holes 15b and 15c of the housing 11. The threaded members 34 are then inserted through these holes and tightened in position.

By tightening the threaded members 34, which are bolts in the embodiments, in position, the internal gear 14 is rotationally and securely fixed to the housing 11, and also the first and second axially split housing portions 11a and 11b are joined together.

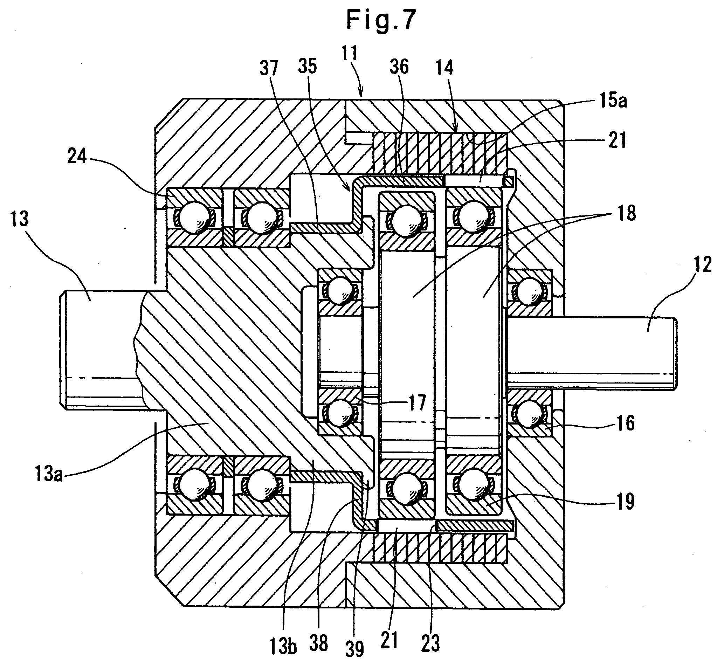

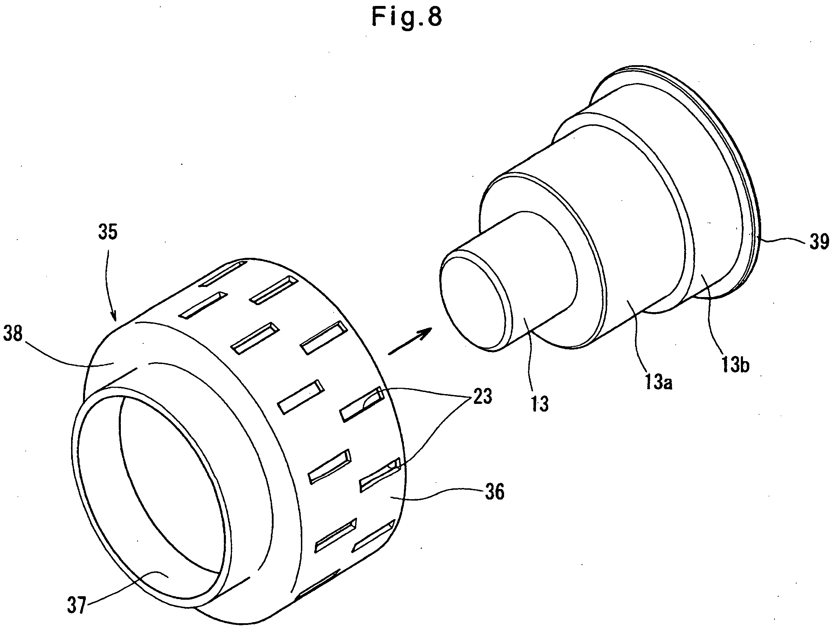

The speed reducer of the third embodiment is shown in Figs. 7 and 8.

The speed reducer of this embodiment differs from the first embodiment in that the retainer 22 is an annular retainer member 35 which is a separate member from the output shaft 13. Otherwise, this embodiment is structurally identical to the first embodiment. Thus, like elements are denoted by identical numerals and their description is omitted.

The annular retainer member 35 is formed by pressing, and comprises a retainer main body 36 disposed between the internal gear 14 and the eccentric shaft portions 18, a flange 38 radially inwardly extending from the end of the main body 36 close to the output shaft 13, and a joint portion 37 extending from the radially inner edge of the flange 38 and fixedly fitted on the tubular portion 13b of the output shaft 13.

As shown in Fig. 8, the joint portion 37 of the retainer member 35 is integrally connected to the (second) end of the retainer main body 36 close to the output shaft 13 so as to be coaxial with the retainer main body 36. The joint portion 37 has its first end in abutment with a flange 39 formed on the tubular portion 13b of the output shaft 13 at its first end (see Fig. 7).

The retainer member 35 is fitted onto the output shaft 13 until its joint portion 37 is press-fitted onto the tubular portion 13b of the output shaft 13 while being in abutment with the flange 39 of the output shaft 13. In this state, the retainer member 35 is axially positioned by the flange 39 (see Fig. 7). Since the joint portion 37 of Fig. 8 is cylindrical, the retainer member 35 of Fig. 8 is radially positioned too relative to the output shaft 13.

In this embodiment, the separate retainer member 35 is fixed to the tubular portion 13b of the output shaft 13. Thus, the retainer member 35 and the output shaft 13 can be manufactured separately from each other. This makes it possible to manufacture the retainer member 35 using a more productive method such as pressing. This also simplifies the manufacturing process of the output shaft 13 thus reducing the manufacturing cost.

Preferably, the joint portion 37 of the retainer member 35 is sandwiched between the flange 39 of the output shaft 13 and the end surface of the inner race of one of the bearings 24, which support the output shaft 13 (see Fig. 7). This prevents axial displacement of the retainer member 35 during operation of the speed reducer.

The joint portion 37 of the retainer member 35 may be fixed to the tubular portion 13b of the output shaft 13 by a method other than press-fitting. For example, these members may be fixed to each other by welding, or by frictional contact.

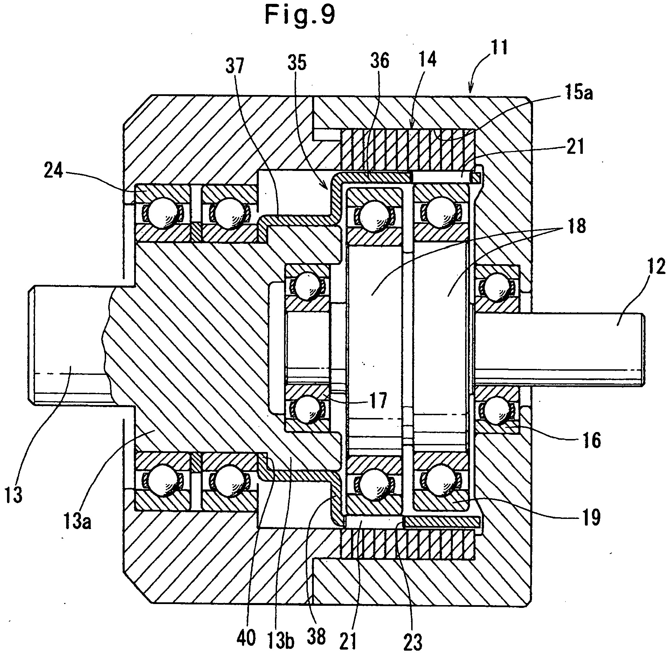

Fig. 9 shows the not claimed fourth embodiment.

In this embodiment, the retainer member 35 is axially positioned relative to the output shaft 13 in a different manner from that of the third embodiment. Otherwise, this embodiment is structurally identical to the third embodiment. Thus, like elements are denoted by identical numerals and their description is omitted.

In particular, the joint portion 37 of the retainer member 35 of this embodiment has a radially inwardly extending engaging flange 40 which is in abutment with the end surface of the tubular portion 13b of the output shaft 13 at the second end of the tubular portion 13b. Thus in this embodiment, the retainer member 35 is axially positioned without the need for the flange 39 on the output shaft 13.

Preferably, the engaging flange 40 of the retainer member 35 is sandwiched between the tubular portion 13b of the output shaft 13 and the end surface of the inner race of one of the bearings 24, which support the output shaft 13 (see Fig. 9). This prevents axial displacement of the retainer member 35 during operation of the speed reducer.

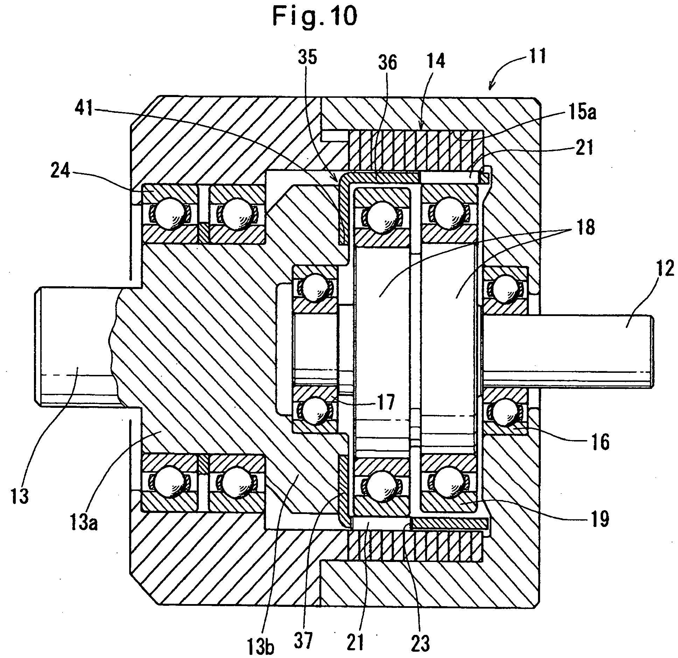

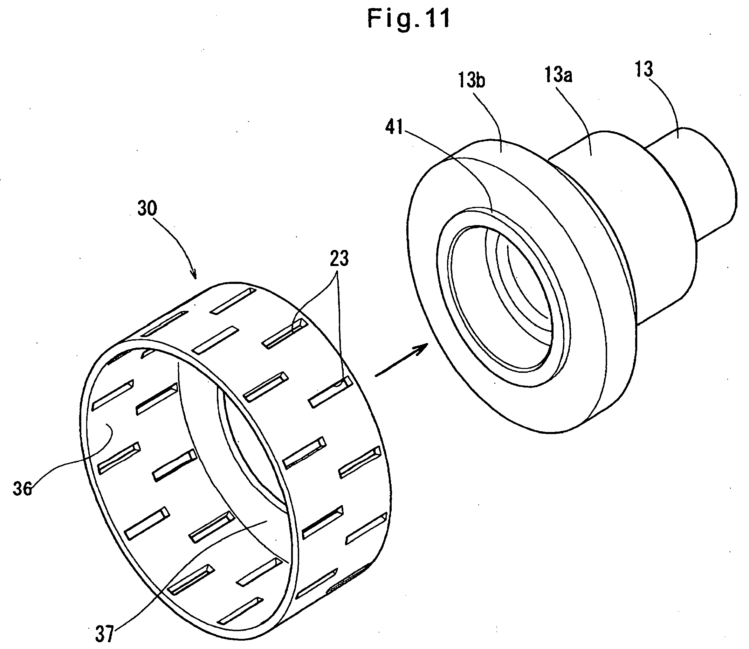

Figs. 10 and 11 show the not claimed fifth embodiment.

The speed reducer of this embodiment differs from the third embodiment in that the joint portion 37 of the retainer member 35 is a radially inwardly extending flange, and that the tubular portion 13b of the output shaft 13 is formed with a small-diameter engaging step 41 at its first end (end on the side of the input shaft 12). Otherwise, this embodiment is structurally identical to the third embodiment. Thus, like elements are denoted by identical numerals and their description is omitted.

The engaging step 41 has an external diameter smaller than the tubular portion 13b of the output shaft 13. The radially inner edge of the joint portion 37 of the retainer member 35 is fitted on the radially outer periphery of the engaging step 41.

The joint portion 37 of the retainer member 35 is fitted on the engaging step 41 of the tubular portion 13b of the output shaft 13, and fix thereby by welding. The retainer member 35 is thus axially positioned relative to the output shaft 13 (see Fig. 10). Since the joint portion 37 of the retainer member 35 is fitted on and fixed to the radially outer periphery of the engaging step 41, the retainer member 35 is radially positioned too, relative to the output shaft 3.

Alternatively, instead of providing the engaging step 41 on the tubular portion 13b of the output shaft 13, the joint portion 37 of the retainer member 35 may be welded to the end surface of the tubular portion 13b at its first end (end on the side of the input shaft 12).

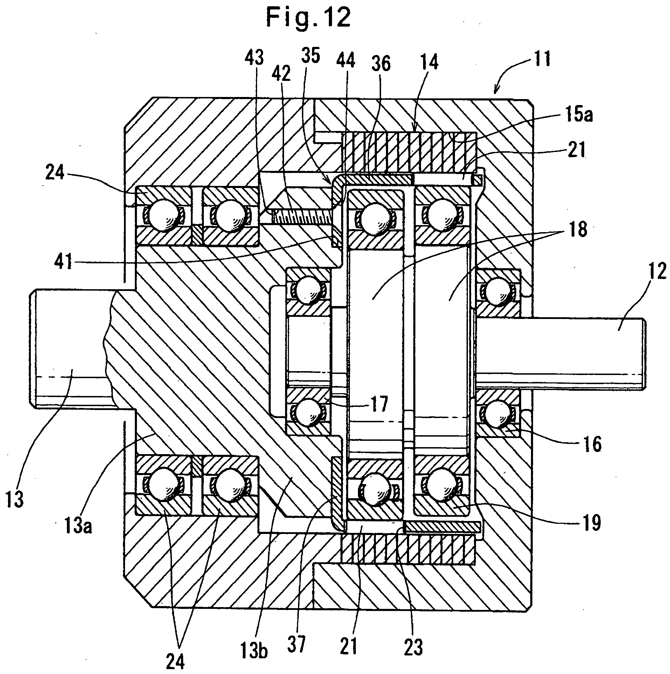

Fig. 12 shows the not claimed sixth embodiment.

The speed reducer of this embodiment differs from the fifth embodiment in that with the joint portion 37 of the retainer member 35 fitted on the radially outer periphery of the engaging step 41, the retainer member 35 is fixed to the output shaft 13 by means of bolts 42 as fixing members. Otherwise, this embodiment is structurally identical to the fifth embodiment. Thus, like elements are denoted by identical numerals and their description is omitted.

By way of example, three such bolts 42 are inserted through three respective circumferentially equidistantly spaced apart through holes 44 formed in the joint portion 37 of the retainer member 35, driven into three respective circumferentially equidistantly spaced apart axial threaded holes 43 formed in the end surface of the tubular portion 13b radially outwardly of the engaging step 41 so as to be axially aligned with the through holes 44, and tightened in position to fix the retainer member 35 to the output shaft 13.

The number of the through holes 44 of the joint portion 37 and thus the number of the threaded holes 43 of the tubular portion 13b are not limited to three but may be fewer or larger than three, provided the retainer member 35 can be securely fixed to the output shaft 13 by the bolts.

With the retainer member 35 fixed to the output shaft 13 in this manner, the former is axially positioned relative to the latter as shown in Fig. 12. Since the joint portion 37 of the retainer member 35 is fitted on and fixed to the radially outer periphery of the engaging step 41, the retainer member 35 is radially positioned too, relative to the output shaft 13.

In the sixth embodiment, the engaging step 41 may be omitted.

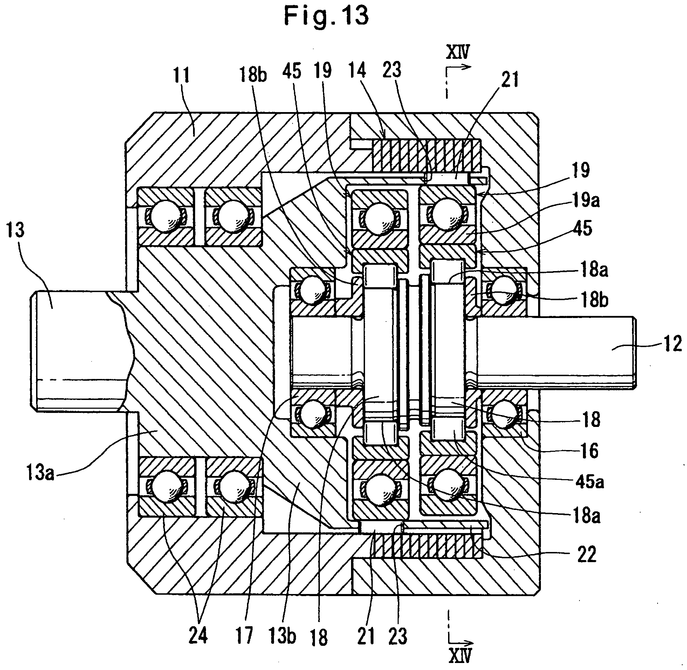

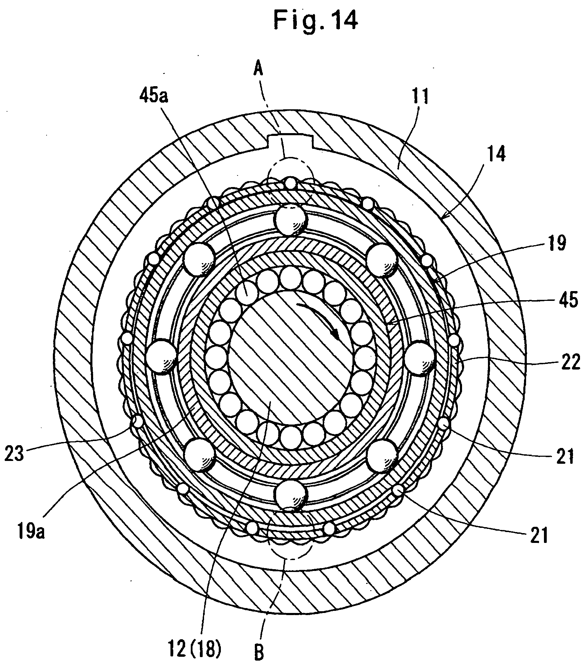

Figs. 13 and 14 show the not claimed seventh embodiment.

In this embodiment, the eccentric shaft portions 18 and the ball bearings 19 fitted around the eccentric shaft portions 18 have different structures from those of first embodiment. Otherwise, this embodiment is structurally identical to the first embodiment. Thus, like elements are denoted by identical numerals and their description is omitted.

In particular, in this embodiment, roller bearings 45 are disposed between the respective eccentric shaft portions 18 and the corresponding ball bearings 19 for supporting the ball bearings 19 so as to be rotatable relative to the eccentric shaft portions 18.

The roller bearings 45 shown in Fig. 14 are full type cylindrical roller bearings, i.e. the type of bearings having no retainer with the adjacent cylindrical rollers 45a kept in contact with each other.

But instead, the roller bearings 45 may be ones including a retainer circumferentially separating the cylindrical rollers 45a from each other. The full type is preferable, though, because a larger number of cylindrical rollers 45a can be mounted in a full type roller bearing, so that a full type roller bearing has a larger radial load capacity. By using a larger number of cylindrical rollers 45a, it is also possible to reduce the contact pressure between each roller and the flanges, thus reducing the friction therebetween and thus the rotational resistance.

The radially outer portion of each eccentric shaft portion 18 serves as the inner race of the corresponding roller bearing 45, and its radially outer surface serves as the radially inner raceway 18a of the bearing 45. Each cylindrical roller 45a has crowning at either end thereof to prevent edge loads.

A pair of flanges are provided at the respective axial end of the raceway 18a on the outer periphery of each eccentric shaft portion 18 to restrict axial movement of the cylindrical rollers 45a. One of each pair of flanges that is located on the side of the bearing 16 or 17, which supports the input shaft 12, comprises an annular flange ring 18b that is located in juxtaposition with the corresponding eccentric shaft portion 18 (see Fig. 13).

The inner race of each roller bearing 45 may comprise a separate annular member from the eccentric shaft portion 18. But by using the radially outer portions of the eccentric shaft portions 18 as the inner races of the respective roller bearings 45, it is possible to minimize the diameter of the roller bearings 45.

The ball bearings 19 are press-fitted around the outer races of the respective roller bearings 45. The roller bearings 45 support the respective ball bearings 19 so as to be rotatable relative to the eccentric shaft portions 18 while the input shaft 12 is rotating.

The radially outer surface of each eccentric shaft portion 18 has a region that is radially most remote from the rotation axis of the input shaft 12 (this region is referred to as "the eccentric region"). Since the ball bearings 19 are rotatable relative to the eccentric shaft portions 18, the inner race 19a of each ball bearing 19 constantly moves circumferentially relative to the above eccentric region. This prevents the same circumferential portion of the inner race 19a from being always located radially outwardly of the eccentric region and thus always subjected to loads from the eccentric region, which in turn prevents e.g. impressions on the corresponding region of the raceway of the inner race 19a of each ball bearing 19.

The ball bearings 19, which are provided around the eccentric shaft portions 18 through the roller bearings 45, ensures that the between the flanges and the rollers of the roller bearings 45 does not increase the rotational resistance, and thus the torque loss, of the entire device, and thus does not deteriorate the responsiveness of the entire device.

In this embodiment too, the retainer 33 of the output shaft 13 may be a separate member 35 from the output shaft 13, like the separate retainer 22 of the third to sixth embodiments.

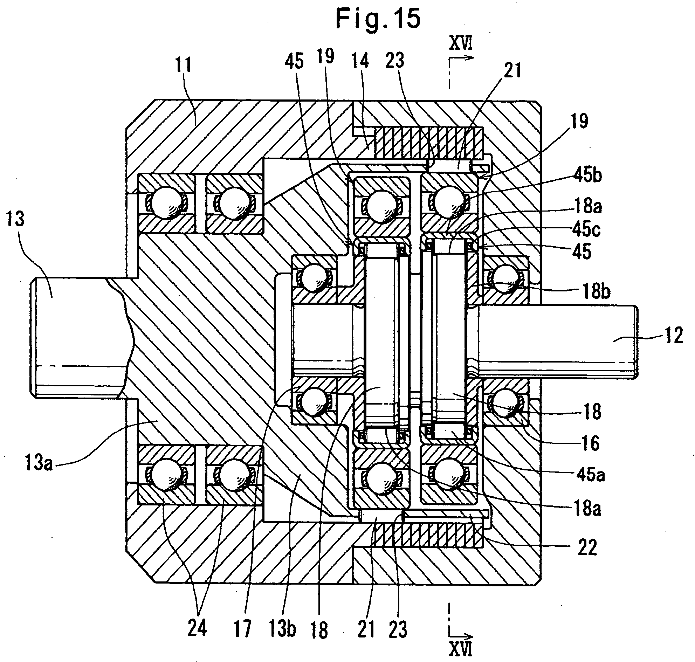

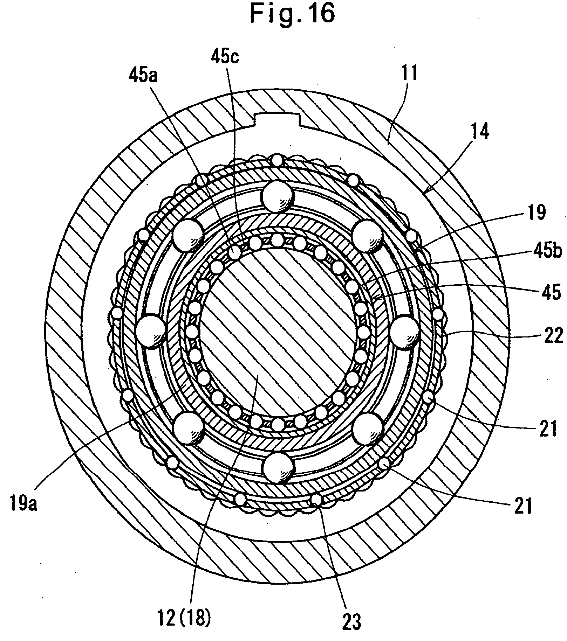

Figs. 15 and 16 show the not claimed eighth embodiment.

The speed reducer of this embodiment differs from the seventh embodiment in that the roller bearings 45 provided around the respective eccentric shaft portions 18 are shell type roller bearings. As shown in Figs. 15 and 16, the roller bearings 45 each comprise a shell type outer race 45b, an inner race which comprises the radially outer portion of the corresponding eccentric shaft portion 18, and needle rollers 45a disposed between the inner and outer races and rollably retained by a retainer 45c. The shell type roller bearings 45 support the ball bearings 19 so as to be rotatable relative to the eccentric shaft portions 18.

Advantages of using the shell type roller bearings 45 include the fact that the shell type outer race 45b can be formed from a steel sheet and thus can be formed at a lower cost than an outer race formed by cutting and grinding an annular member formed by casting or forging, and that it is possible to minimize the diameter of the roller bearings 45.

More specifically, since such a shell type outer race can be formed at a lower cost than an outer race formed by cutting and grinding an annular member formed by casting or forging.

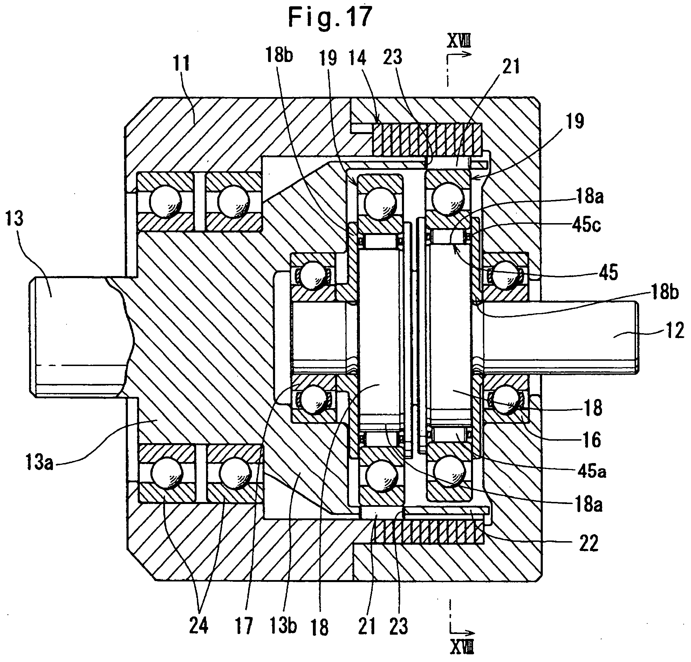

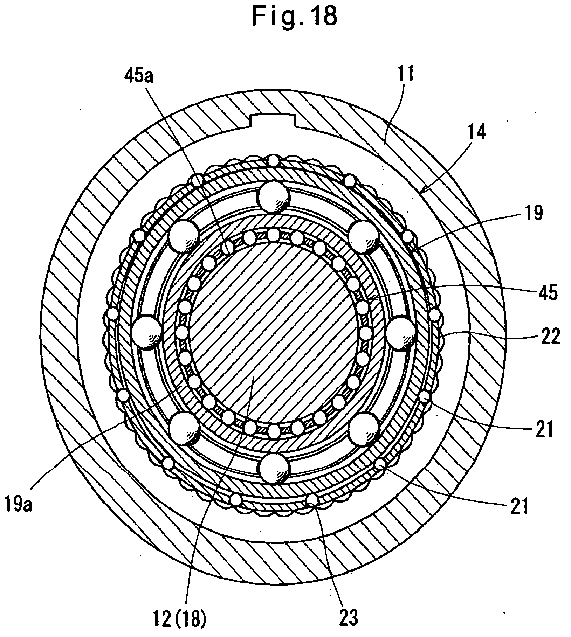

Figs. 17 and 18 show the not claimed ninth embodiment.

The speed reducer of this embodiment differs from the seventh embodiment in that as shown Fig. 17, each roller bearing 45, which is provided around the eccentric shaft portion 18, includes a retainer 45c retaining the cylindrical rollers 45a so as to be circumferentially spaced apart from each other, that its inner race comprises the radially outer portion of the eccentric shaft portion 18, and that the inner race 19a of the ball bearing 19 is used as the outer race of the roller bearing 45 too.

With this arrangement, since the inner race of the ball bearing 19 and the radially outer portion of the eccentric shaft portion 18 are also used as the outer race and the inner race of the roller bearing 45, it is possible to further reduce the diameter of the roller bearings 45 and thus the diameter of the ball bearings 19.

### DESCRIPTION OF THE NUMERALS

- 11.: Housing
- 11a.: First split housing portion
- 11b.: Second split housing portion
- 12.: Input shaft
- 13.: Output shaft
- 13a.: Trunk portion
- 13b.: Tubular portion
- 14.: Internal gear
- 15a.: Engaging groove
- 15b, 15c.: Threaded hole
- 16, 17.: Bearing
- 18.: Eccentric shaft portion
- 18a.: Raceway
- 18b.: Flange ring
- 19.: Ball bearing
- 19a.: Inner race
- 21.: Roller
- 22.: Retainer
- 23.: Pocket
- 24.: Bearing
- 25.: End wall
- 26.: Shaft insert hole
- 30.: Plate-shaped internal gear member
- 31.: Protrusion
- 32.: Tooth
- 33.: Through hole
- 34.: Threaded member
- 35.: Retainer member
- 36.: Retainer main body
- 37.: Joint portion
- 38.: Flange
- 39.: Flange
- 40.: Engaging flange
- 41.: Engaging step
- 42.: Bolt
- 43.: Threaded hole
- 44.: Through hole
- 45.: Roller bearing
- 45a.: Cylindrical roller
- 45b.: Shell type outer race
- 45c.: Retainer
- 51.: Housing
- 52.: Input shaft
- 53.: Output shaft
- 54.: Internal gear
- 55.: Eccentric shaft portion
- 56.: Roller
- 57.: Retainer member
- 58.: Pocket

## Claims

1. A speed reducer comprising a housing (11), an internal gear (14) having teeth (32) and fixed in position in the housing (11), an input shaft (12) rotatably supported by the housing (11), an output shaft (13) provided coaxially with the input shaft (12), the input shaft (12) having an eccentric shaft portion (18) at its end portion on the side of the output shaft (13), the eccentric shaft portion (18) being located radially inside of the internal gear (14) so as to be rotatable relative to the internal gear (14), the output shaft (13) having a retainer (22) at its end portion on the side of the input shaft (12), the retainer (22) being located between the internal gear (14) and the eccentric shaft portion (18) so as to be rotatable relative to the internal gear (14) and the eccentric shaft portion (18) and having a plurality of circumferentially spaced apart pockets (23) which are fewer in number than the teeth (32), and rollers (21) received in the respective pockets (23) and configured to mesh with the teeth (32) one after another, whereby when the input shaft (12) rotates once, the rollers (21) move circumferentially by a distance equal to the circumferential dimension of each of the teeth (32),
**characterized in that** the retainer (22) is an annular retainer member (35) separate from the output shaft (13) and having a joint portion (37) joined to the output shaft (13), thereby rotationally fixing the retainer member (35) to the output shaft (13), the retainer member (35) has a main body, wherein the joint portion (37) is located radially inwardly of the main body, wherein the output shaft (13) has a flange (39), and the joint portion (37) is fitted around the output shaft (13) while being in abutment with the flange (39), wherein the flange (39) is provided at an end portion of the output shaft (13) on the side of the input shaft (12), and the joint portion (37) is fitted around the output shaft (13) while being sandwiched between the flange (39) and a bearing (24) rotatably supporting the output shaft (13).

2. The speed reducer of claim 1, **characterized in that** the joint portion (37) is tubular in shape, and fitted around the output shaft (13).

## Patentansprüche

1. Ein Geschwindigkeits-Reduzierer, der umfasst ein Gehäuse (11), ein Innen-Zahnrad (14), das Zähne (32) hat und in einer Position in dem Gehäuse (11) fixiert ist, eine Eingangs-Welle (12) drehbar gelagert durch das Gehäuse (11), eine Ausgangs-Welle (13), koaxial vorgesehen mit der Eingangs-Welle (12), die Eingangs-Welle (12) hat einen exzentrischen Wellenabschnitt (18) an dessen Endabschnitt an der Seite der Ausgangs-Welle (13), der exzentrische Wellenabschnitt (18) ist radial innen von dem Innen-Zahnrad (14) angeordnet, so dass dieser relativ drehbar zu dem Innen-Zahnrad (14) ist, die Ausgangs-Welle (13) hat einen Halter (22) an deren Endabschnitt an der Seite der Eingangs-Welle (12), der Halter (22) ist zwischen dem Innen-Zahnrad (14) und dem exzentrischen Wellenabschnitt (18) angeordnet, so dass dieser relativ drehbar zu dem Innen-Zahnrad (14) und dem exzentrischen Wellenabschnitt (18) ist und hat eine Mehrzahl von, in Umfangsrichtung voneinander beabstandeten, Taschen (23), die geringer in der Anzahl sind als die Zähne (32), und Rollen (21), aufgenommen in den jeweiligen Taschen (23), und konfiguriert, um mit den Zähnen (32) nacheinander einzugreifen, wodurch, wenn die Eingangs-Welle (12) einmal dreht, die Rollen (21) sich in Umfangsrichtung durch einen Abstand gleich zu der Umfangs-Abmessung von jedem der Zähne (32) bewegen,
**dadurch gekennzeichnet, dass** der Halter (22) ein ringförmiges Halterelement (35) ist, getrennt von der Ausgangs-Welle (13), und einen Verbindungsabschnitt (37) hat, verbunden mit der Ausgangs-Welle (13), wodurch das Halterelement (32) mit der Ausgangs-Welle (13) drehend fixiert ist, das Halterelement (35) hat einen Hauptkörper, wobei der Verbindungsabschnitt (37) radial innerhalb von dem Hauptkörper angeordnet ist, wobei die Ausgangs-Welle (13) einen Flansch (39) hat, und der Verbindungsabschnitt (37) um die Ausgangs-Welle (13) gesetzt, während sie Anlage mit dem Flansch (39) ist, wobei der Flansch (39) an einem Endabschnitt der Ausgangs-Welle (13) an der Seite der Eingangs-Welle (12) vorgesehen ist, und der Verbindungsabschnitt (37) um die Ausgangs-Welle (13) gesetzt ist, während dieser zwischen dem Flansch (39) und einem Lager (24) eingesetzt ist, das die Ausgangs-Welle (13) drehbar lagert.

2. Der Geschwindigkeits-Reduzierer von Anspruch 1, **dadurch gekennzeichnet, dass** der Verbindungsabschnitt (37) rohrartig in der Form ist, und um die Ausgangs-Welle (13) gesetzt ist.

## Revendications

1. Réducteur de vitesse comprenant un carter (11), un pignon interne (14) possédant des dents (32) et maintenu en position dans le carter (11), un arbre d'entrée (12) supporté par le carter (11) en pouvant tourner, un arbre de sortie (13) prévu coaxial à l'arbre d'entrée (12), l'arbre d'entrée (12) comportant une partie d'arbre excentrée (18) au niveau de son extrémité sur le côté de l'arbre de sortie (13), la partie d'arbre excentrée (18) étant située radialement à l'intérieur du pignon interne (14) de façon à pouvoir tourner par rapport au pignon interne (14), l'arbre de sortie (13) comportant une cage de retenue (22) située entre le pignon interne (14) et la partie d'arbre excentrée (18) de façon à pouvoir tourner par rapport au pignon interne (14) et à la partie d'arbre excentrée (18) et possédant une pluralité de logements (23) espacés circonférentiellement et qui sont en nombre moindre que les dents (32), ainsi que des rouleaux (21) reçus dans les logements respectifs (23) et configurés pour s'engrener avec les dents (32) l'un après l'autre, grâce à quoi, lorsque l'arbre d'entrée (12) tourne une fois, les rouleaux (21) se déplacent circonférentiellement d'une distance égale à la dimension de la circonférence de chacune des dents (32),
**caractérisé en ce que** la cage de retenue (22) est un élément de retenue annulaire (35) séparé de l'arbre de sortie (13) et comportant une partie formant joint (37) réunie à l'arbre de sortie (13), ce qui fixe ainsi en rotation l'élément de retenue (35) à l'arbre de sortie (13), l'élément de retenue (35) possédant un corps principal, la partie formant joint (37) étant située radialement vers l'intérieur du corps principal, l'arbre de sortie (13) possédant un flasque (39) et la partie formant joint (37) étant ajustée autour de l'arbre de sortie (13) tout en venant en butée avec le flasque (39), le flasque (39) étant prévu au niveau d'une extrémité de l'arbre de sortie (13) sur le côté de l'arbre d'entrée (12), et la partie formant joint (37) étant ajustée autour de l'arbre de sortie (13) tout en étant prise en sandwich entre le flasque (39) et un roulement (24) supportant avec une possibilité de rotation l'arbre de sortie (13).

2. Réducteur de vitesse selon la revendication 1, **caractérisé en ce que** la partie formant joint (37) est de forme tubulaire et est ajustée autour de l'arbre de sortie (13).
